# EUROPEAN PATENT APPLICATION

(11) **EP 2 433 682 A1**
(43) Date of publication of application: **28.03.2012**
(21) Application number: 10011172.3
(22) Date of filing: 28.09.2010
(51) Int. Cl.: A63F 13/06, A63F 13/10

(54) **Using EEG brainwave data obtained via a dry or wet sensor (wired or non-wired) device to direct or otherwise influence the outcome of any media file, including but not limited to a video, video advertisement or movie file**

(30) Priority: 23.09.2010 US
(71) Applicant: Myndplay Limited, Marble Arch London W1H 5YN (GB)
(72) Inventor: Azam Aurooj, Mohammed, Loughton, Essex IG10 3BG (GB)
(74) Representative: Saleem, Nishtar

(57) **Abstract**

A method, system and process using brainwave electro-encephalographic data from any sensor to direct or influence the outcome of any media file including but not limited to video, video advertisement or movie file sequences via a media player. It uses algorithm data based upon the brainwave readings and conveys them to a media player which refers to a text based computer-scripting language file to direct the outcome or sequence of scenes in a media file playable through various platforms, including but not limited to personal computers, television, Digital Video Disc, cinema screens, handheld devices and video consoles. The computer-scripting file uses pre-defined alternative outcomes in accordance with the user's state of mind as measured by the EEG device and directs the player to play the appropriate scene or time code within a video, video advertisement or movie file, thus enabling a user to influence the progress/outcome of a file.

## Description

### FIELD OF THE INVENTION

This invention relates generally to a method, system and process in the fields of home and recreational entertainment involving the use of a device that reads and monitors brainwave electro-encephalographic ('EEG') data to determine the subsequent scene and/or outcome via a single or multi platform media player thereby enabling users to influence the outcome of any media file using their own state of mind and brain activity.

### BACKGROUND OF THE INVENTION

Devices such as audio headsets with one or more bio-signal sensors are currently being used to revolutionise the computer gaming market. An example of such a device can be found in the US Patent Application number US/2009/0214060 A1 published on 27th August 2009. The available technology involves using such a device to measure electrical impulses generated by brain activity and uses proprietary algorithms to observe the user's state of mind. Generally, the prior art employs technology which uses EEG data to allow a new level of gaming interactivity with a user's brain behaviour. However, no such prior art exists in the field of video entertainment. What is needed is a method, system and process that provides a means for enabling individuals to interact with video media files.

### BRIEF SUMMARY OF THE INVENTION

The present invention involves the method, system and process of reading brainwave data from single or multiple users obtained through any means of EEG monitoring and recording to direct, control or otherwise influence the outcome and/or sequence of scenes within any video media file, such as, for example, but not limited to video, video advertisement or movie file sequences via a multi platform media player or media device.

It is an object of the present invention to create a novel way to use measured EEG data to determine the outcome or sequence of scenes in a media file, revolutionising the film making process and the users' experiences, creating a truly interactive media experience.

The novelty of the present invention is the method, system and process which utilises a single or multiple users' EEG brainwave data to allow viewers to interact with video media by controlling the predefined outcomes of a video sequence or sequences in a video media file through the use of an EEG device, a media player and a text based computer scripting language file ('text based file') such as, for example, XML.

The present invention receives the monitored EEG data via a computer or media player which refers to a text based file which accompanies the video media file. The text based file instructs the media player or device to play the appropriate scene in accordance with what the brainwave data reflects.

Although a variety of brain computer interface ('BCI') technology is available, it has never been put to technical use to control, direct, alter or otherwise influence the outcome or sequence of scenes in a video, video advertisement or movie based file. Consequently it is desirable to provide a method, process and system to combine a dry or wet sensor (wired or non-wired) device to a single or multi platform media process/player to control and determine the outcome or sequence of scenes in media files.

### BRIEF DESCRIPTION OF THE DRAWINGS

Various embodiments of the invention are disclosed in the following detailed description and the accompanying diagram.

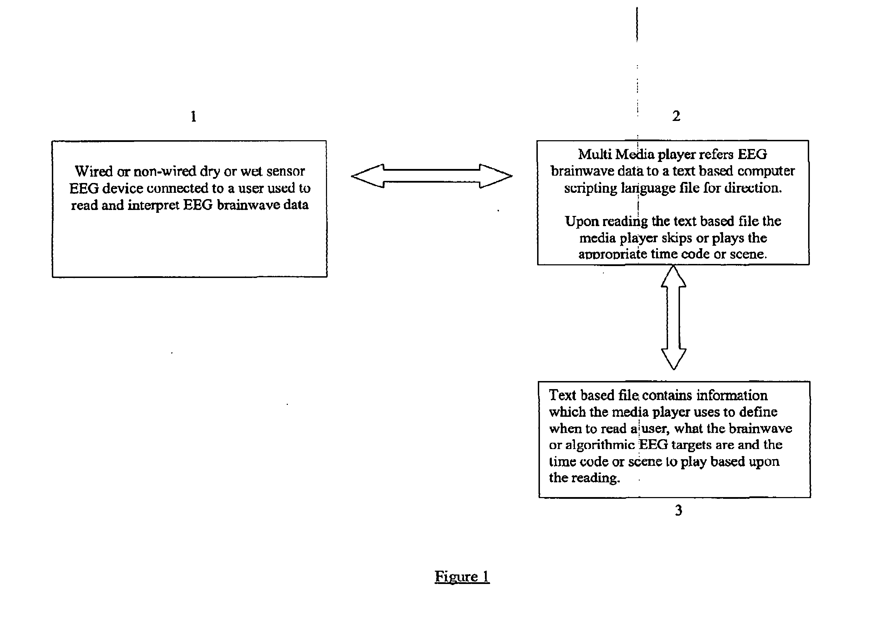

Figure 1 is a block diagram demonstrating the method, system and process of collecting brainwave EEG data which is interpreted by a media player which refers to a text based file to direct or otherwise influence the outcome of any media file.

### DETAILED DESCRIPTION

The invention relates to the use of EEG signals based upon a user's brain activity to alter the outcome or sequence of scenes in any media file, such as, for example, but not limited to video, video advertisement or movie file sequences. It is suitable for use for example; at home, in cinemas, via systems of interconnected computer networks such as the Internet or in any device capable of playing video media files.

**'MIME Technology' (Mind Interactive Media Experience)**

MIME Technology is the essential software process which forms the present invention.

The present invention uses a user's brainwave EEG data readings taken from a dry or wet sensor (wired or non wired) device while the user is viewing a media file such as, for example a video, video advertisement or movie. The data is logged and read at pre-programmed intervals. The present invention refers the data to a text based file such as, for example, but not limited to XML, which contains instructions on which parts of the data should be read, monitored and interpreted and directions on how it should be translated into changes in the media file. The text based file is pre-programmed with instructions and directions to play alternative scenes and outcomes for the particular media file being viewed. Based on the brainwave data, the text based file directs a media player to play the appropriate scene in the media file.

MIME Technology can be applied to both linear and non-linear plot sequence files. In a linear sequence file, MIME Technology uses the data generated from a user's brainwave EEG activity to reach one of a few pre-programmed outcomes in a video, video advertisement or movie file. For example, a user may be viewing a critical football match in a film and may be in a tense state of mind. Using the focus or relaxation algorithms obtained through this user's EEG data, the present invention refers the data of the user's tense state of mind to the text based file for the direction to play the appropriate scene in accordance with a tense state of mind. The outcome of this particular scene can be that a football player either scores a goal or misses. The plot will then continue from this point.

In a non-linear sequence file, MIME Technology allows the user to skip across scenes and time lines. It may contain linear sequences, but has the capability to follow non-linear outcomes.

The invention involves the use of a device such as, for example, a headset comprising one or more bio-signal sensors which detect, measure and monitor brainwave EEG data. This data can then be converted to algorithms which in turn allow a viewer to directly influence the outcomes or direction of the video media file. An example of how user brainwaves can be measured based on EEG signals detected by sensors is described in more detail in U.S. Patent Application Serial No. 11/656,828, filed on 22 January 2007 and entitled "Method and Apparatus for Quantitatively Evaluating Mental States Based on Brain Wave Signal Processing System".

**Monitoring and conveying brainwave EEG data**

As illustrated at 1 in **Figure 1****,** a user's brainwave EEG data is monitored and read by a biofeedback device. The applicant/inventor and any lawful licensees and assignees thereunder can determine how frequently readings are taken and logged and this can be linked to particular scenes of the video media file. The data will be read and temporarily logged at particular 'time stamps' in the media file.

As illustrated at 2 in Figure 1, Myndplay is a media player software application, which uses MIME Technology to play interactive media files. Myndplay can be programmed into software operating systems and hardware platforms. A consumer would also be able to purchase and download Myndplay for use on their own hardware platform, such as, for example a personal computer subject to licensing agreements. Myndplay can also be built into other hardware platforms such as, for example, video games consoles, video and DVD players and cinema projectors with the consent of the applicant/inventor. As a media player, Myndplay is capable of receiving algorithms and brainwave EEG data from single or multiple users.

Through the software application of Myndplay, MIME Technology takes the algorithms or brainwave data and conveys it to a text based file for direction as to what scene to play on Myndplay in accordance with the user's brainwave reading. The EEG data obtained from the user is translated into proprietary algorithms prior to MIME Technology's involvement in the process and these algorithms inform MIME Technology of the user's specific state of mind.

Through Myndplay, MIME Technology refers the algorithm data to the text based file located at 3 on **Figure 1****.** The text based file directs Myndplay on when to read the user or viewer, for how long to read and then to play the appropriate sequence of scenes in the media file. The text based file contains time codes for pre-defined alternative scenes and scenarios which correspond to the user's monitored brain activity.

MIME Technology allows for the media file to be played either directly on Myndplay or on a video display unit, such as, for example, a television set, personal computer, handheld device and cinema screens.

**Monitoring multiple user's**

MIME Technology can be used by single or multiple users viewing the same media file. In the case of multiple users, MIME Technology is able to use the collective average of all the users' data to determine the outcome or sequence of scenes in a video, video advertisement or movie file.

The applicant/inventor and all lawful licensees and assignees thereunder can pre-define the ratios, averages and percentages of the multiple users' data to determine what type or level of brainwave activity is required for the text based file to command a particular outcome or sequence of scenes.

MIME Technology has the capability to use EEG and algorithm data collected and temporarily logged or stored via Myndplay to develop new algorithms and improve existing technology in the fields of scientific research and film and media production.

**Overview**

The invention can be implemented in many ways, including, but not limited to, for example, a software product embodied in a computer readable storage medium and a system of using neuro-signals dependant on human emotions to direct, control or otherwise influence the outcome of a video media file.

Conventional mechanisms for altering, directing or otherwise influencing the outcome of a media file based on user preferences are limited to pushing buttons or some other physical interaction. In addition, the EEG user data (algorithms) have not been measured, monitored and collated in a way that would enable advertising agencies and film producers to develop and enhance their advertisements and films to create various alternative scenarios for a truly interactive media experience.

The present invention will involve a system, method and process utilising software and hardware to monitor and convey a user's brainwave EEG data to enable single or multiple users to interact with and essentially alter and direct the outcome and sequence of scenes in a media file, such as, for example video, video advertisement or movie file.

In operation, a user may be connected to a dry or wet sensor (wired or non-wired) EEG device whilst viewing a media file played through Myndplay. At pre-programmed stages, MIME Technology reads the user's brainwave data and interprets the user's state of mind. Through the media player/process, Myndplay, MIME Technology refers the user's data to a text based file which directs Myndplay to jump to a particular scene or time code in the media file dependent upon the user's brain activity. Myndplay then plays the commanded scene or sequence of scenes.

The alternative outcomes and sequences of scenes of the media file can be developed by (and this is not limited to) film producers, studio and movie directors, advertising agencies and marketing companies.

For the user, no physical steps are involved other than placing a dry or wet sensor (wired or non-wired) EEG device on his or her head or any part of the human anatomy capable of monitoring and collecting EEG data.

The scope of the invention is limited only by the claims and the invention encompasses numerous alternatives, modifications and equivalents.

## Claims

1. A method, comprising:
Receiving information contained in algorithms (already derived from a device that monitors/collects/interprets EEG data) associated with a single or multiple users' brainwave activity;
Using the data as a means to select particular scenes to allow the user to direct the outcome or sequence of scenes in a video, video advertisement or movie file;
Referring the data to a text based computer scripting language file, such as, for example, but not limited to, XML as a means to direct a media player or device to skip to particular scenes or time codes in a media file;
Using the collective average of multiple users as a means to determine the outcome or a sequence of scenes in a media file;
Presenting the media file to a user(s) on a display unit, including, but not limited to, a television set, personal computer, handheld device and cinema screen.

2. The method of claim 1, wherein the producers, directors and creators of a media file use the obtained EEG data as a means of developing interactivity, improving and enhancing films, videos or video advertisements.

3. The method of claim 1, wherein the user of the software process of the present invention, namely MIME Technology, determines the outcome of a particular scenario or entire plot of a video, video advertisement or movie file on a visual display unit, cinema or other projector screen, whether directly or through a third party media provider using their mind through data as received from an EEG feedback device.

4. The method of claim 1, wherein the user's data as contained in the EEG feedback is logged and temporarily stored for purposes such as, for example, film and advertisement direction and production.

5. The method of claim 1, wherein the user's data as contained in the EEG feedback is logged and temporarily stored for purposes such as, for example, developing new algorithms, improving and enhancing MIME Technology and Myndplay to enhance the user's experience.

6. A process, comprising software technology that transmits a single or multiple users' EEG data from a dry or wet sensor (wired or non-wired) EEG device to a media player which then refers to a text based computer scripting language file which in turn directs the media player to allow users to control, or otherwise influence the outcome and/or sequence of scenes in a media file.

7. The process of claim 6 wherein a media player/process can itself play, display or otherwise project a media file or process.

8. The process of claim 6 wherein a media player/process can be developed to be compatible with any other hardware device, such as, for example, a visual display unit, cinema or other projector screen, whether directly or through a third party media provider, to play, display or otherwise project a media file.

9. The process of claim 6 wherein a media player such as Myndplay is capable of receiving EEG and EEG algorithm data from a single or multiple users.

10. A system, comprising:
Transmission of algorithms derived from brainwave EEG data to any video player or media device;
Use of a text based computer scripting language file as a means to direct a media player to skip to particular scenes or time codes in a media file;
Use of the collective average of multiple users' brainwave algorithm data as a means to determine the outcome or sequence of scenes in a media file;
Presentation and display of an interactive media file to a user or multiple users via a display unit.

11. The system of claim 10, wherein the brainwave EEG data is logged and temporarily stored and used as a means to develop new algorithms and improve existing technology in the fields of scientific research and film and media production.

12. The system of claim 10, wherein the brainwave EEG data is logged and temporarily stored and used as a means to improve and enhance MIME Technology and Myndplay to enhance the user's experience.
